# EUROPEAN PATENT SPECIFICATION

(11) **EP 2 821 925 B1**
(45) Date of publication and mention of the grant of the patent: **10.05.2017**
(21) Application number: 12882854.8
(22) Date of filing: 09.08.2012
(51) Int. Cl.: G06F 17/30, G06F 12/08, G06F 3/06

(54) **DISTRIBUTED DATA PROCESSING METHOD AND APPARATUS**
VERFAHREN UND VORRICHTUNG FÜR VERTEILTE DATENVERARBEITUNG
PROCÉDÉ ET APPAREIL DE TRAITEMENT DE DONNÉES DISTRIBUÉES

(43) Date of publication of application: 07.01.2015
(73) Proprietor: Huawei Technologies Co., Ltd., Longgang District Shenzhen, Guangdong 518129 (CN)
(72) Inventor: SHI, Shengbing, Shenzhen, Guangdong 518129 (CN); WANG, Daohui, Shenzhen, Guangdong 518129 (CN); WANG, Yan, Shenzhen, Guangdong 518129 (CN)
(74) Representative: Körber, Martin Hans
(86) International application number: PCT/CN2012/079876
(87) International publication number: WO 2014/023000

(56) References cited:
- WO-A1-2010/050943
- CN-A- 102 142 006
- CN-A- 102 332 004
- US-A1- 2003 204 691
- US-A1- 2007 067 583
- US-B1- 7 743 031
- US-B2- 7 249 218

## Description

### TECHNICAL FIELD

Embodiments of the present invention relate to data storage technologies, and in particular, to a distributed data processing method and apparatus.

### BACKGROUND

In distributed data storage technologies, space of a physical volume such as a disk and a partition may be managed and virtualized into a logical volume (Logical Volume). The logical volume virtualizes storage so that the storage is no longer limited by a size of a physical disk. By using the logical volume, a file system can be extended onto multiple disks, and multiple disks or disk partitions are aggregated into one logical volume. When no data is written by a user into a created logical volume, no physical storage space needs to be really allocated. Instead, the physical storage space is allocated dynamically at time of writing, thereby fulfilling purposes of saving the physical storage space and postponing cost investment.

A snapshot (Snapshot) is a completely available copy of a specified data set. The copy includes an image of corresponding data at a specific time point (a time point of copying). The snapshot is a special logical volume, and is an accurate copy of an ordinary logical volume created by a user, or a precise duplicate of the ordinary logical volume. When a snapshot is created, logical storage space of an existing ordinary logical volume is marked as logical storage space of the snapshot, and new logical storage space is allocated to the ordinary logical volume for use. After the snapshot is created, unmodified data blocks share the logical storage space with the snapshot, but all subsequent modifications will be written into new logical storage space of the ordinary logical volume itself. When an ordinary logical volume is deleted, all snapshots created on the ordinary logical volume are deleted.

During a data storage process, a logical volume is generally divided into multiple logical data blocks of a same size, and a logical data block is used as a minimum incremental unit of data. For recording data blocks into which data has been written and those into which data has not been written, a bitmap (Bitmap) mechanism is generally used, in which each logical data block corresponds to one bit. If data has been written into the logical data block, the bit is set to 1; otherwise, the bit is set to 0. When a snapshot is created, a Bitmap of a current ordinary logical volume needs to be backed up as a Bitmap of the created snapshot, and the Bitmap of the ordinary logical volume is reset. In this way, each time data is newly written, the Bitmap needs to be updated synchronously. Especially in a distributed data processing system, changes of the Bitmap need to be synchronized into each cluster client processing apparatus in real time. In addition, when data is read, a cluster client needs to query the Bitmap of the current ordinary logical volume and the Bitmap of all snapshots to determine a snapshot or an ordinary logical volume that stores the desired data. If the Bitmap is temporarily stored in memory, high resource consumption of the memory is caused; and, if the Bitmap is not temporarily stored in the memory, resource consumption of a storage device itself increases, which affects data processing efficiency.

Document US 7743031 B1 relates to a snapshot tree structure which includes a base volume storing a current user data at a current time, a first read-only snapshot descending from the base volume, and a second read-only snapshot descending from the first read-only snapshot. The first read-only snapshot is created at a first time earlier than the current time. The first read-only snapshot stores a first data of the base volume at the first time before the first data is modified in the base volume. The second read-only snapshot is created at a second time earlier than the first time. The second read-only snapshot stores a second data of the base volume at the second time before the second data is modified in the base volume.

### SUMMARY

Embodiments of the present invention provide a distributed data processing method and apparatus to avoid a resource consumption problem brought by a need for global setting or Bitmap reading/writing in a distributed storage system.

According to a first aspect, an embodiment of the present invention provides a distributed data processing method, including:
receiving, by a cluster client processing apparatus, storage information of a logical volume that is currently used by a user, wherein the storage information is sent by a management apparatus, wherein the storage information of the logical volume comprises four-tuple information that describes each logical data block on the logical volume, wherein the four-tuple information comprises a tree identifier, a data block identifier, a branch identifier, and a node identifier, wherein the tree identifier is used to indicate a logical volume on which the logical data block is located, and all logical data blocks located on a same logical volume have a same tree identifier, wherein the data block identifier is used to indicate a location of the logical data block in the logical volume, wherein when a new logical volume is created, a branch identifier of the new logical volume is set to 0, whenever a clone volume is created onto the logical volume, a new branch identifier is allocated to the clone volume, and a clone relationship between the clone volume and the logical volume is recorded, wherein the node identifier is used to indicate a snapshot operation for the logical volume or the clone volume, a node identifier of the logical volume is set to 0, whenever a snapshot volume is created onto the logical volume or the clone volume, a new node identifier is allocated to the snapshot volume;
receiving, by the cluster client processing apparatus, a data reading or writing command sent by a terminal of the user, and determining a first storage information according to the data reading or writing command and the storage information of the logical volume, wherein the first storage information comprises one or more groups of first four-tuple information, and each group of first four-tuple information comprises a first tree identifier, a first branch identifier, a first data block identifier, and a first node identifier;
determining, by the cluster client processing apparatus, a data processing node corresponding to each group of first four-tuple storage information according to the tree identifier and the data block identifier in each group of first four-tuple information; and
sending, by the cluster client processing apparatus, a data processing command to the data processing node corresponding to each group of four-tuple information, wherein the data processing command comprises each group of first four-tuple information corresponding to the data processing node so that the data processing node corresponding to each group of first four-tuple information performs a read or write operation according to each group of first four-tuple information;
wherein when the data processing command is used to indicate a data reading operation, the performing, by the data processing node corresponding to each group of first four-tuple information, a read operation according to each group of four-tuple information, comprises:
   obtaining, by the data processing node, each group of first four-tuple information in the data processing command, and determining, according to the first four-tuple information, a physical data block to be processed in a data storage device, and, if the physical data block exists, performing a read operation on the physical data block;
   if the physical data block does not exist, decreasing, by the data processing node, the first node identifier in each group of first four-tuple information at a step of 1 until it is found that a physical data block corresponding to a decreased first four-tuple information exists; and
   if the corresponding physical data block still does not exist after the first node identifier in each group of four-tuple information is decreased to 0, decreasing, by the data processing node, the first branch identifier in each group of first four-tuple information at a step of 1 to find whether the corresponding physical data block exists on a parent branch until the corresponding physical data block is found.

In a first possible implementation manner, the determining, by the cluster client processing apparatus, a first storage information according to the data reading or writing command and the storage information of the logical volume, includes:
obtaining, by the cluster client processing apparatus, the first tree identifier and the first branch identifier of the logical volume corresponding to the data reading or writing command according to the storage information of the logical volume and operation object information in the data reading or writing command, determining one or more groups of first data block identifiers according to the storage information of the logical volume and offset information in the data reading or writing command, obtaining a maximum node identifier corresponding to the one or more groups of first data block identifiers, the first tree identifier, and the first branch identifier, and adding 1 to the maximum node identifier to generate the first node identifier.

In a fifth possible implementation manner, after the receiving, by a cluster client processing apparatus, storage information of a logical volume sent by a management apparatus and currently used by a user, the method further includes after the receiving, by a cluster client processing apparatus, storage information of a logical volume sent by a management apparatus and currently used by a user:
receiving, by the cluster client processing apparatus, a snapshot command sent by the management apparatus, and determining a second storage information according to the snapshot command and the storage information of the logical volume, where the second storage information includes one or more groups of four-tuple information, and each group of four-tuple information includes a second tree identifier, a second branch identifier, a second data block identifier, and a second node identifier; and
obtaining, by the cluster client processing apparatus, a second maximum node identifier corresponding to the second tree identifier, the second branch identifier, and the second data block identifier, and adding 1 to the second maximum node identifier.

In a sixth possible implementation manner, after the receiving, by a cluster client processing apparatus, storage information of a logical volume sent by a management apparatus and currently used by a user, the method further includes after the receiving, by a cluster client processing apparatus, storage information of a logical volume sent by a management apparatus and currently used by a user:
receiving, by the cluster client processing apparatus, a clone command sent by the management apparatus, and determining a third storage information according to the clone command and the storage information of the logical volume, where the third storage information includes a third tree identifier, a third branch identifier, a third data block identifier, and a third node identifier; and
obtaining, by the cluster client processing apparatus, a maximum branch identifier corresponding to the third tree identifier and the third data block identifier, adding 1 to the maximum branch identifier to generate a clone branch identifier, generating a fourth storage information out of the third tree identifier, the third data block identifier, the clone branch identifier, and a clone node identifier, establishing a clone relationship between the fourth storage information and the third storage information, and broadcasting the clone relationship, where the clone node identifier is 0.

According to a second aspect, an embodiment of the present invention provides a distributed data processing system, comprising a cluster client processing apparatus and a data processing node, wherein
the cluster client processing apparatus is configured to receive storage information of a logical volume that is currently used by a user, wherein the storage information is sent by a management apparatus, wherein the storage information of the logical volume comprises four-tuple information that describes each logical data block on the logical volume, wherein the four-tuple information comprises a tree identifier, a data block identifier, a branch identifier, and a node identifier, wherein the tree identifier is used to indicate a logical volume on which the logical data block is located, and all logical data blocks located on a same logical volume have a same tree identifier, wherein the data block identifier is used to indicate a location of the logical data block in the logical volume, wherein when a new logical volume is created, a branch identifier of the new logical volume is set to 0, whenever a clone volume is created onto the logical volume, a new branch identifier is allocated to the clone volume, and a clone relationship between the clone volume and the logical volume is recorded, wherein the node identifier is used to indicate a snapshot operation for the logical volume or the clone volume, a node identifier of the logical volume is set to 0, whenever a snapshot volume is created onto the logical volume or the clone volume, a new node identifier is allocated to the snapshot volume;
the cluster client processing apparatus is further configured to receive a data reading or writing command sent by a terminal of the user, and determine a first storage information according to the data reading or writing command and the storage information of the logical volume, wherein the first storage information comprises one or more groups of first four-tuple information, and each group of first four-tuple information comprises a first tree identifier, a first branch identifier, a first data block identifier, and a first node identifier;
the cluster client processing apparatus is further configured to determine a data processing node corresponding to each group of first four-tuple storage information according to the tree identifier and the data block identifier in each group of first four-tuple information; and
the cluster client processing apparatus is further configured to send a data processing command to the data processing node corresponding to each group of four-tuple information, wherein the data processing command comprises each group of first four-tuple information corresponding to the data processing node so that the data processing node corresponding to each group of first four-tuple information performs a read or write operation according to each group of first four-tuple information; and wherein
the data processing node is configured, when the data processing command is used to indicate a data reading operation, to obtain each group of first four-tuple information in the data processing command, and to determine, according to the first four-tuple information, a physical data block to be processed in a data storage device, and, if the physical data block exists, to perform a read operation on the physical data block;
the data processing node is further configured, if the physical data block does not exist, to decrease the first node identifier in each group of first four-tuple information at a step of 1 until it is found that a physical data block corresponding to a decreased first four-tuple information exists; and
the data processing node is further configured, if the corresponding physical data block still does not exist after the first node identifier in each group of four-tuple information is decreased to 0, to decrease the first branch identifier in each group of first four-tuple information at a step of 1 to find whether the corresponding physical data block exists on a parent branch until the corresponding physical data block is found.

It can be learnt from the foregoing technical solutions that, in the distributed data processing method and apparatus provided in the embodiments of the present invention, a cluster client processing apparatus receives storage information of a logical volume sent by a management apparatus and currently used by a user, where the storage information of the logical volume is four-tuple information that describes a logical data block, where the four-tuple information includes a tree identifier, a data block identifier, a branch identifier, and a node identifier; equally divides the logical volume to obtain logical data blocks of a same size; receives a data reading or writing command sent by the user, and determines a first storage information according to the data reading or writing command and the storage information of the logical volume; determines a data processing node corresponding to each group of four-tuple storage information according to the tree identifier and the data block identifier in each group of four-tuple information; and sends a data processing command to the data processing node corresponding to each group of four-tuple information, so that the data processing node corresponding to each group of four-tuple information performs a read or write operation according to each group of four-tuple information. By setting the storage information that includes the tree identifier, the branch identifier, the data block identifier, and the node identifier, the storage information can be managed and maintained in more flexible manners by using each data block on the logical volume as a unit. When the user performs a data reading or writing operation, the cluster client processing apparatus only needs to determine the storage information for the corresponding logical data block and perform a corresponding operation accordingly, thereby avoiding occupation of memory space and a resource consumption problem brought by a need for global setting or Bitmap reading/writing in a distributed storage system, and improving data processing efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a distributed data processing system according to an embodiment of the present invention;
FIG. 2 is a schematic diagram of a tree structure according to an embodiment of the present invention;
FIG. 3 is a flowchart of a first distributed data processing method according to an embodiment of the present invention;
FIG. 4 is a flowchart of a second distributed data processing method according to an embodiment of the present invention;
FIG. 5 is a schematic diagram of another tree structure according to an embodiment of the present invention;
FIG. 6 is a schematic diagram of still another tree structure according to an embodiment of the present invention;
FIG. 7 is a flowchart of a third distributed data processing method according to an embodiment of the present invention;
FIG. 8 is a schematic structural diagram of a cluster client processing apparatus according to an embodiment of the present invention;
FIG. 9 is a schematic structural diagram of another cluster client processing apparatus according to an embodiment of the present invention; and
FIG. 10 is a schematic structural diagram of a data processing node according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

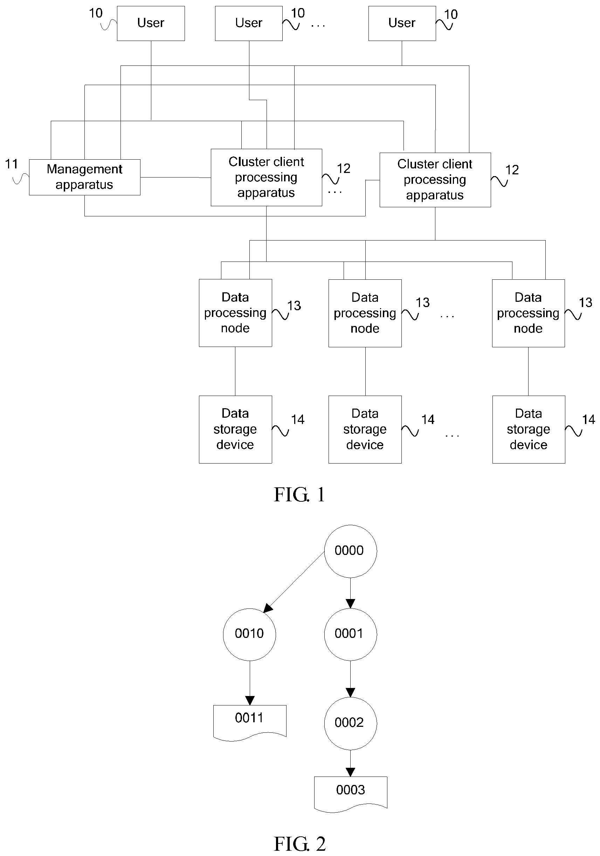

FIG. 1 is a schematic structural diagram of a distributed data processing system according to an embodiment of the present invention. The examplary diagram is an exemplary system for implementing a distributed processing method provided in the embodiment of the present invention, instead of a unique system architecture that can be used for the method of the present invention. A person skilled in the art may construct other systems without substantive changes according to specific implementation manners of the system and method provided herein.

As shown in FIG. 1, a distributed data processing system provided in this embodiment includes a management apparatus 11, at least one cluster client processing apparatus 12, at least two data processing nodes 13, and at least two data storage devices 14. As a user of the entire distributed system, a user 10 is an initiator of a storage I/O command and a data management command.

The management apparatus 11 provides a storage management-type interface oriented to the user 10, and the user may use the interface to send, to the management apparatus, a data management command of creating a logical volume, a snapshot, or a link clone and using the logical volume. After receiving the data management command of the user 10, the management apparatus 11 performs a corresponding operation according to the data management command. If the user 10 sends a command of creating a logical volume, the management apparatus 11 allocates a tree identifier, a branch identifier, and a node identifier of a to-be-created logical volume to the user 10. If the user 10 sends a command of using a logical volume, the management apparatus 11 automatically allocates at least one cluster client processing apparatus 12 that serves the user 10 as specified by the user 10 or according to a configured rule, and synchronously sends, to the at least one cluster client processing apparatus 12, the tree identifier, the branch identifier, and the node identifier of the logical volume used by the user 10, and therefore, when the at least one cluster client processing apparatus 12 receives the storage I/O command sent by the user 10, the management apparatus 11 may process the command correspondingly according to information that is synchronously sent by the management apparatus 11. If the user 10 sends a command of creating a snapshot or a link clone, the management apparatus 11 alloates, to the user 10, the tree identifier, the branch identifier, and the node identifier of a created snapshot volume or link clone volume, and, when the user 10 uses the logical volume, synchronously sends, to the at least one cluster client processing apparatus 12, the tree identifier, the branch identifier, and the node identifier of the created snapshot volume or link clone volume, or sends the command of creating a snapshot or a link clone to the at least one cluster client processing apparatus 12, and therefore, according to the command of creating a snapshot or a link clone, the at least one cluster client processing apparatus 12 allocates the tree identifier, the branch identifier, and the node identifier of the created snapshot volume or link clone volume on a basis of the information that is received synchronously. If the user 10 sends a file closing command, the management apparatus 11 sends the file closing command to the at least one cluster client processing apparatus 12, and at least one cluster client processing apparatus 12 deletes the tree identifiers, the branch identifiers, and the node identifiers of the logical volume, the snapshot volume, and the link clone volume corresponding to the file management command.

It should be noted herein that a "logical volume" mentioned in this application refers to an ordinary logical volume that is in a non-snapshot form and created by the user, and a special logical volume such as a "snapshot logical volume" or a "link clone logical volume" is termed a "snapshot volume" or a "link clone volume".

The at least one cluster client processing apparatus 12 provides a storage service for the user 10 in a form of a logical volume in the distributed data processing system in a user-oriented manner, provides a portal for the user 10 to gain access to a distributed cluster, receives the storage I/O command of the user 10, and converts the storage I/O command of the user 10 into a data processing command of an internal protocol of the cluster. The at least one cluster client processing apparatus 12 performs data storage in a form of a logical data block in the distributed data processing system in a manner of being oriented to a data processing node 13 (dividing, according to a size of a logical volume, the logical volume into logical data blocks of a same size), determines a logical data block of a logical volume related to the current storage I/O command of the user, determines the data processing node 13 on which the logical data block is located, and sends a data processing command to the data processing node 13. The data processing command includes four-tuple information of a tree identifier, a data block identifier, a branch identifier, and a node identifier of a logical data block corresponding to the data processing node (that is, to be processed by the data processing node). In addition, the cluster client processing apparatus 12 further provides an interface oriented to the management apparatus 11, receives a data management command sent by the management apparatus 11, and performs operations such as snapshot or link clone.

Specifically, the cluster client processing apparatus 12 maintains storage information that uses each logical data block on the logical volume as a unit (each logical data block on the logical volume represents each logical data block on all ordinary volumes, snapshot volumes, and link clone volumes under the logical volume). The storage information mainly includes four-tuple information of a tree identifier, a data block identifier, a branch identifier, and a node identifier of the logical data block, for example, the four-tuple information existent after a first logical data block of a logical volume 0 created by the user undergoes each of operations such as snapshot and link clone. The cluster client processing apparatus 12 itself maintains the storage information that uses each logical data block on the logical volume as a unit, so that a volume-snapshot tree shown in FIG. 2 is obtained logically. Each logical data block of each logical volume forms a volume-snapshot tree, and each node on the tree is identified by using four-tuple information, including a tree identifier, a data block identifier, a branch identifier, and a node identifier. The tree identifier is used to indicate a logical volume on which the logical data block is located (all logical data blocks located on a same logical volume have a same tree identifier). The data block identifier is used to indicate a location of the logical data block in the logical volume. For example, the logical volume may be divided into eight logical data blocks according to a size of the logical volume, and the eight logical data blocks are numbered 0 to 7 which serve as identifiers of the data blocks. When a new logical volume is created, a branch identifier of the new logical volume may be set to 0. Whenever a clone volume is created onto the logical volume, a new branch identifier such as 1 is allocated to the clone volume, and a clone relationship between the clone volume and the logical volume is recorded. The node identifier is used to indicate a snapshot operation for the original logical volume or the clone volume. Whenever a snapshot volume is created onto the logical volume, a new node identifier such as 1 is allocated to the snapshot volume.

The tree structure shown in FIG. 2 includes multiple nodes, each of which corresponds to storage space of the logical data block in each operation state. A node in the tree structure may be identified by using four-tuple information. For ease of description, in the following embodiments, an order of the four-tuple information is described as a tree identifier, a data block identifier, a branch identifier, and a node identifier. FIG. 2 shows a tree structure with a tree identifier 0 and a data block identifier 0 to record a data processing process for a specific logical data block in a specific logical volume. When a new logical volume is created, a first logical data block 0 in the logical volume corresponds to a node 0000. In this case, the node 0000 is a leaf node, and represents storage space of the logical data block 0. When a snapshot volume of the new logical volume is created, a snapshot of the node 0000 is created for the logical data block 0 so that the node 0000 becomes a snapshot node. A new node 0001 is added as a leaf node. A snapshot of the node 0001 is created so that the node 0001 becomes a snapshot node. A new leaf node 0002 is added, and a snapshot of the node 0002 is created so that the node 0002 becomes a snapshot node. A new leaf node 0003 is added. The node 0000, the node 0001, the node 0002, and the node 0003 serve as a branch of the tree structure, with a branch identifier being 0. When a clone volume of the new logical volume is created, the node 0000 is cloned for the logical data block 0, and a clone node 0010 is added. When a snapshot volume of the clone volume is created, a snapshot of the clone node 0010 is created for the logical data block 0 so that the clone node 0010 becomes a snapshot node. A new clone leaf node 0011 is added. The node 0010 and the node 0011 serve as another branch of the tree structure, with a branch identifier being 1.

The management apparatus 11, the cluster client processing apparatus 12, and the data processing node may implement management and operation on data based on the tree structure shown in FIG. 2. It is noteworthy that in order to improve management of a data processing process, data processing may be implemented in a manner of the tree structure shown in FIG. 2. However, a person skilled in the art may also implement the data processing in other manners. In the data processing node, a corresponding physical data block may exist in the storage space of the logical data block in each operation state, and therefore, the four-tuple information may identify the corresponding physical data block.

The at least two data processing nodes 13 provide an interface oriented to the cluster client processing apparatus 12, receive a data processing command that is forwarded by the cluster client processing apparatus 12 and intended for a specific logical data block, and determine, according to the four-tuple information, storage space of the logical data block that currently requires an operation, and perform a corresponding data operation on a bottom-layer data storage device 14 according to the determined storage space (corresponding to physical data block).

The data storage device 14 is configured to perform various storage operations on the data according to a command of the data processing node 13.

The management apparatus 11, the cluster client processing apparatus 12, and the data processing node 13 may be implemented in a form of software or hardware in specific practice, and a specific implementation manner is not limited in this embodiment.

The foregoing has given an overview of components of a system example that implements the method of the present invention. How each component specifically implements the method provided in the present invention will be described in more detail in the following embodiments.

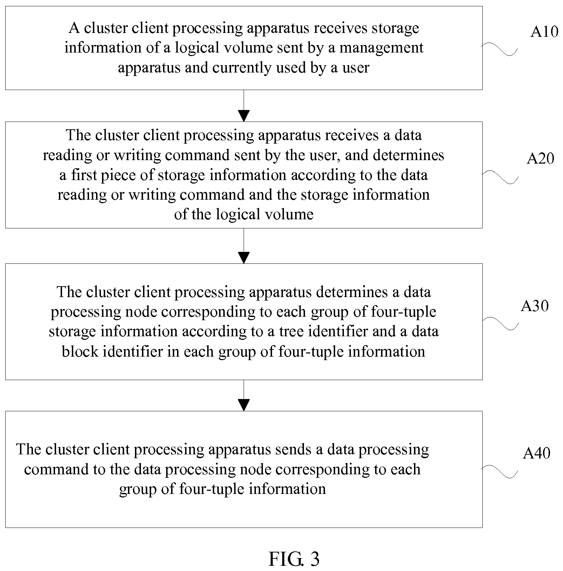

FIG. 3 is a flowchart of a first distributed data processing method according to an embodiment of the present invention. As shown in FIG. 3, the distributed data processing method provided in this embodiment may be specifically applied to a data processing process in a distributed data processing system.

The distributed data processing method provided in this embodiment specifically includes the following steps:
Step A10: A cluster client processing apparatus receives storage information of a logical volume sent by a management apparatus and currently used by a user, where the storage information of the logical volume is four-tuple information that describes each logical data block on the logical volume, where the four-tuple information includes a tree identifier, a data block identifier, a branch identifier, and a node identifier.
Step A20: The cluster client processing apparatus receives a data reading or writing command sent by the user, and determines a first storage information according to the data reading or writing command and the storage information of the logical volume, where the first storage information includes one or more groups of four-tuple information, and each group of four-tuple information includes a first tree identifier, a first branch identifier, a first data block identifier, and a first node identifier.
Step A30: The cluster client processing apparatus determines a data processing node corresponding to each group of four-tuple storage information according to the tree identifier and the data block identifier in each group of four-tuple information.
Step A40: The cluster client processing apparatus sends a data processing command to the data processing node corresponding to each group of four-tuple information, where the data processing command includes each group of four-tuple information corresponding to the data processing node so that the data processing node corresponding to each group of four-tuple information performs a read or write operation according to each group of four-tuple information.

Specifically, the user may interact with the distributed data processing system by using a terminal, where the terminal may be any of various terminal devices such as a mobile phone, a personal computer, a tablet computer, and a notebook computer. The user sends a data management command to the management apparatus by using the terminal, where the data management command may be specifically used to indicate to the user an operation of creating a logical volume, a snapshot, or a link clone and an operation of using the logical volume. For example, the user newly creates a file that corresponds to at least one logical volume, and therefore, the user sends a command of creating a logical volume to the management apparatus, and the management apparatus allocates three-tuple information of a created logical volume to the user, where the three-tuple information includes storage information such as a tree identifier, a branch identifier, and a node identifier. When the user uses the file, the user may specify a cluster client processing apparatus, and the management apparatus synchronously sends storage information of a logical volume currently used by the user to the cluster client processing apparatus specified by the user. If the user specifies no cluster client processing apparatus, the management apparatus may determine a cluster client processing apparatus according to a configured rule, and synchronously sends the storage information of the logical volume currently used by the user to the cluster client processing apparatus. The storage information of the logical volume is four-tuple information that describes a logical data block, where the four-tuple information includes a tree identifier, a data block identifier, a branch identifier, and a node identifier, and logical data blocks of a same size may be obtained by equally dividing the logical volume according to a preset data block capacity. The cluster client processing apparatus maintains the storage information that uses each logical data block on the logical volume as a unit.

When the user needs to perform a read or write operation on the data block on the logical volume, the user sends a data reading or writing command to the corresponding cluster client processing apparatus by using a terminal. The cluster client processing apparatus determines a first storage information according to the data reading or writing command and the storage information of the logical volume, where the first storage information includes one or more groups of four-tuple information, and each group of four-tuple information includes a first tree identifier, a first branch identifier, a first data block identifier, and a first node identifier. The cluster client processing apparatus determines a corresponding data processing node according to each group of four-tuple information, and sends a data processing command to the data processing node, so that the data processing node performs a corresponding read or write operation according to the four-tuple information in the data processing command. When a bottom-layer data storage device is arranged in the system, all specific data is stored in the data storage device, and therefore, the data processing node may perform the corresponding read or write operation on the data storage device. When the data processing command is used to indicate a data reading operation, the data processing node sends read data to the cluster client processing apparatus, and the cluster client processing apparatus sends the data to the user.

In the distributed data processing method provided in this embodiment, a cluster client processing apparatus receives storage information of a logical volume sent by a management apparatus and currently used by a user, where the storage information of the logical volume is four-tuple information that describes a logical data block, where the four-tuple information includes a tree identifier, a data block identifier, a branch identifier, and a node identifier; equally divides the logical volume to obtain logical data blocks of a same size; receives a data reading or writing command sent by the user, and determines a first storage information according to the data reading or writing command and the storage information of the logical volume; determines a data processing node corresponding to each group of four-tuple storage information according to the tree identifier and the data block identifier in each group of four-tuple information; and sends a data processing command to the data processing node corresponding to each group of four-tuple information, so that the data processing node corresponding to each group of four-tuple information performs a read or write operation according to each group of four-tuple information. By setting the storage information that includes the tree identifier, the branch identifier, the data block identifier, and the node identifier, the storage information can be managed and maintained in more flexible manners by using each data block on the logical volume as a unit. When the user performs a data reading or writing operation, the cluster client processing apparatus only needs to determine the storage information for the corresponding logical data block and perform a corresponding operation accordingly, thereby avoiding occupation of memory space and a resource consumption problem brought by a need for global setting or Bitmap reading/writing in a distributed storage system, and improving data processing efficiency.

In this embodiment, step A20-the determining, by the cluster client processing apparatus, a first storage information according to the data reading or writing command and the storage information of the logical volume, may specifically include:
obtaining, by the cluster client processing apparatus, the first tree identifier and the first branch identifier of the logical volume corresponding to the data reading or writing command according to the storage information of the logical volume and operation object information in the data reading or writing command, determining one or more groups of first data block identifiers according to the storage information of the logical volume and offset information in the data reading or writing command, obtaining a maximum node identifier corresponding to the one or more groups of first data block identifiers, the first tree identifier, and the first branch identifier, and adding 1 to the maximum node identifier to generate the first node identifier.

Specifically, the data reading or writing command sent by the user carries the operation object information and the offset information. The operation object information is specifically used to indicate whether the user operates on an ordinary logical volume, a snapshot volume, or a link clone volume. The cluster client processing apparatus obtains the first tree identifier and the first branch identifier of the logical volume corresponding to the data reading or writing command according to the storage information of the logical volume and the operation object information. The offset information is specifically used to indicate a location of the logical data block on which the user operates. The cluster client processing apparatus determines the one or more groups of first data block identifiers according to the storage information of the logical volume and the offset information, and then obtains the maximum node identifier corresponding to the one or more groups of first data block identifiers, the first tree identifier, and the first branch identifier according to the storage information of the logical volume, and adds 1 to the maximum node identifier to generate the first node identifier. With further reference to FIG. 2, for example, the first tree identifier, the first data block identifier, and the first branch identifier are 0, 0, and 0 respectively, and therefore, a maximum node identifier 3 on a branch with a branch identifier being 0 is obtained, where 3 is a first maximum node identifier. 1 is added to 3 to generate the first node identifier, that is, 4. Therefore, the first storage information is 0004, and 0004 is carried in the data processing command and sent to the corresponding data processing node. A node 0004 is added to the tree structure. The cluster client processing apparatus may synchronously update the added node on the management apparatus.

In an implementation manner, if the user performs a data writing operation, the data processing command is used to indicate the data writing operation, where the data processing command further carries to-be-written data. When receiving the data processing command, the data processing node extracts the first storage information 0004 from the data processing command, and learns that the first storage information 0004 does not exist, and therefore, allocates a physical data block to be processed to the 0004 and writes the to-be-written data into the physical data block to be processed.

In another implementation manner, if the user performs a data reading operation, the data processing command is used to indicate the data reading operation. When receiving the data processing command, the data processing node extracts the first storage information 0004 from the data processing command, and learns that the first storage information 0004 does not exist, and therefore, subtracts 1 from the first node identifier, where the first storage information is 0003 after 1 is subtracted, and then obtains a physical data block corresponding to 0003 and reads data in the physical data block.

In this embodiment, the data processing command is used to indicate a data reading operation, and correspondingly, the performing, by the data processing node corresponding to each group of four-tuple information, a read operation according to each group of four-tuple information, may specifically include:
obtaining, by the data processing node corresponding to each group of four-tuple information, each group of four-tuple information in the data processing command, and determining, according to the four-tuple information, a physical data block to be processed in a data storage device, and, if the physical data block exists, directly performing a read operation on the physical data block.

In this embodiment, the distributed data processing method may further include:
if the physical data block does not exist, decreasing, by the data processing node, the first node identifier in each group of four-tuple information at a step of 1 until it is found that a physical data block corresponding to a decreased four-tuple information exists; and
if the corresponding physical data block still does not exist after the first node identifier in each group of four-tuple information is decreased to 0, decreasing, by the data processing node, the first branch identifier in each group of four-tuple information at a step of 1 to find whether the corresponding physical data block exists on a parent branch until the corresponding physical data block is found.

In this embodiment, the data processing command is used to indicate a data writing operation, and correspondingly, the performing, by the data processing node corresponding to each group of four-tuple information, a write operation according to each group of four-tuple information, includes:
obtaining, by the data processing node corresponding to each group of four-tuple information, each group of four-tuple information in the data processing command, and determining, according to the four-tuple information, a physical data block to be allocated in a data storage device, and performing a write operation on the physical data block to be allocated.

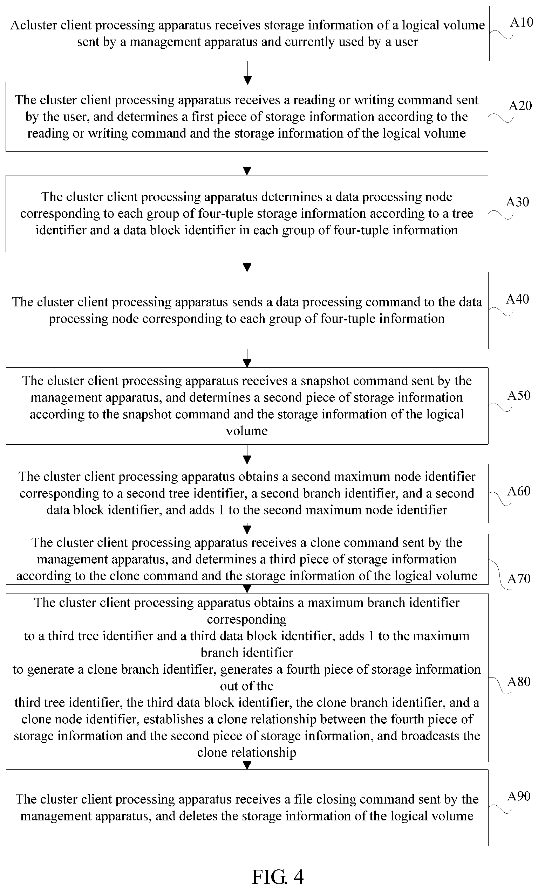

FIG. 4 is a flowchart of a second distributed data processing method according to an embodiment of the present invention. As shown in FIG. 4, in this embodiment, after step A10-the receiving, by a cluster client processing apparatus, storage information of a logical volume sent by a management apparatus and currently used by a user, the method may further include the following steps:
Step A50: The cluster client processing apparatus receives a snapshot command sent by the management apparatus, and determines a second storage information according to the snapshot command and the storage information of the logical volume, where the second storage information includes one or more groups of four-tuple information, and each group of four-tuple information includes a second tree identifier, a second branch identifier, a second data block identifier, and a second node identifier.
Step A60: The cluster client processing apparatus obtains a second maximum node identifier corresponding to the second tree identifier, the second branch identifier, and the second data block identifier, and adds 1 to the second maximum node identifier.

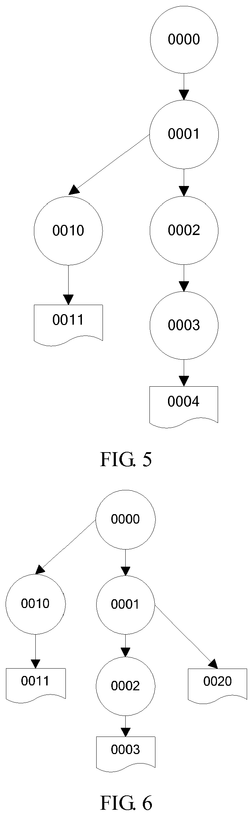

Specifically, the user may also perform a snapshot operation on the data, and therefore, the user sends a data management command of creating a snapshot to the management apparatus, and the management apparatus sends a snapshot command to the cluster client processing apparatus. The snapshot command may specifically carry logical volume information, operation object information, and offset information. The second tree identifier, the second branch identifier, the second data block identifier, and the second node identifier may be determined according to the logical volume information, the operation object information, the offset information, and the storage information of the logical volume. As shown in FIG. 5, still using the example in which the second tree identifier, the second branch identifier, and the second data block identifier are 0, 0, and 0 respectively, a maximum node identifier 3 on a branch with a branch identifier being 0 is obtained, where 3 is a second maximum node identifier. By adding 1 to the second maximum node identifier, the second node identifier is updated to 4. During a process in which the user performs processing of a snapshot operation on the data, the management apparatus may also perform the foregoing processing, and the cluster client processing apparatus may not notify the data processing node. That is, the data processing node performs no processing on the snapshot operation, and the snapshot operation on the data is only recorded in the cluster client processing apparatus, which reduces workload of the data processing node and avoids resource waste.

In this embodiment, after step A10-the receiving, by a cluster client processing apparatus, storage information of a logical volume sent by a management apparatus and currently used by a user, the method may further include the following steps:
Step A70: The cluster client processing apparatus receives a clone command sent by the management apparatus, and determines a third storage information according to the clone command and the storage information of the logical volume, where the third storage information includes a third tree identifier, a third branch identifier, a third data block identifier, and a third node identifier.
Step A80: The cluster client processing apparatus obtains a maximum branch identifier corresponding to the third tree identifier and the third data block identifier, adds 1 to the maximum branch identifier to generate a clone branch identifier, generates a fourth storage information out of the third tree identifier, the third data block identifier, the clone branch identifier, and a clone node identifier, establishes a clone relationship between the fourth storage information and the second storage information, and broadcasts the clone relationship, where the clone node identifier is 0.

Specifically, the user may also perform a clone operation on the data, and therefore, the user sends a data management command of creating a link clone to the management apparatus, and the management apparatus sends a clone command to the cluster client processing apparatus. The clone command may specifically carry logical volume information, operation object information, and offset information. The third tree identifier, the third branch identifier, the third data block identifier, and the third node identifier, which are a third storage information, may be determined according to the logical volume information, the operation object information, the offset information, and the storage information of the logical volume. As shown in FIG. 6, for example, the third storage information is 0001, and a maximum branch identifier in the tree structure corresponding to the third storage information is 1, which is the maximum branch identifier. Therefore, 1 is added to the maximum branch identifier to generate a clone branch identifier, that is, 2. The third tree identifier, the third data block identifier, the clone branch identifier, and the clone node identifier form the third storage information. The clone node identifier is set to 0. Therefore, the fourth storage information is 0020, which corresponds to a node 0020. A clone relationship between the third storage information 0001 and the fourth storage information 0020 is established, which is reflected by a parent-child relationship between the node 0001 and the node 0020 in the tree structure shown in FIG. 6. During a process in which the user performs processing of a clone operation on the data, the management apparatus may also perform the foregoing processing, and the cluster client processing apparatus may only need to notify the corresponding data processing node of the clone relationship by means of broadcast, and therefore, when the user performs a read or write operation on the data, the data processing node performs corresponding processing according to the clone relationship, and when needing to learn the clone relationship, the data processing node requests the clone relationship from the cluster client processing apparatus, which reduces processing pressure of the cluster client processing apparatus.

It is noteworthy that steps A20 to A40 are a process of processing a data reading or writing command, steps A50 to A60 are a process of processing a snapshot command, and steps A70 to A80 are a process of processing a clone command. The three processes of processing may be implemented concurrently, and there is no definite time sequence between them.

In this embodiment, after step A10-the receiving, by a cluster client processing apparatus, storage information of a logical volume sent by a management apparatus and currently used by a user, the method may further include the following step:
Step A90: The cluster client processing apparatus receives a file closing command sent by the management apparatus, and deletes the storage information of the logical volume.

Specifically, when closing a file that is being used, the user sends a file closing command to the management apparatus. The management apparatus sends the file closing command to the cluster client processing apparatus, and the cluster client processing apparatus deletes the storage information of the logical volume to release the storage space and avoid waste of the storage space.

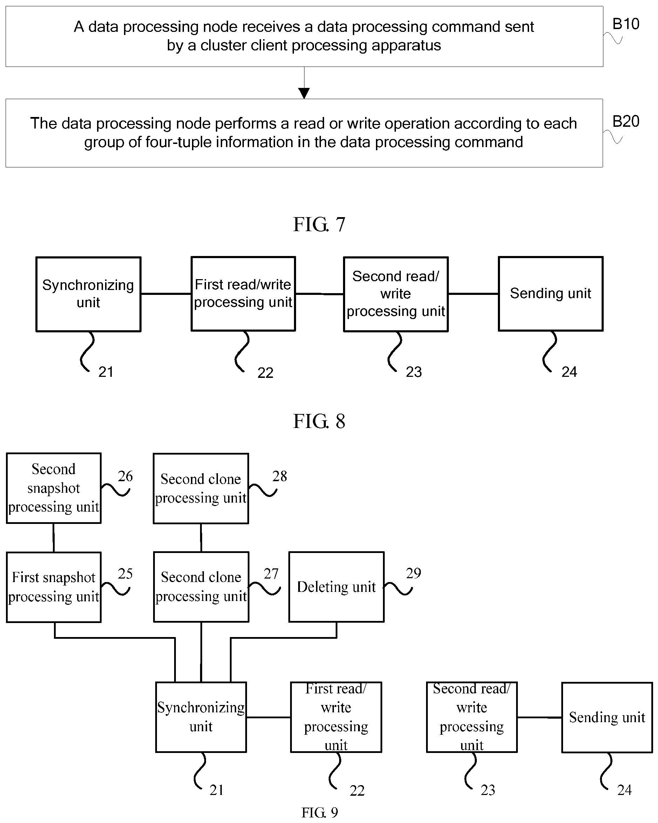

FIG. 7 is a flowchart of a third distributed data processing method according to an embodiment of the present invention. As shown in FIG. 7, the distributed data processing method provided in this embodiment may cooperate with the method that is provided in any embodiment of the present invention and applicable to the cluster client processing apparatus, so as to implement a process of data processing. The detailed implementation process is not described herein again. The distributed data processing method may be executed by a data processing node, and the data processing node may be specifically implemented in a form of software and/or hardware.

In this embodiment, the distributed data processing method specifically includes the following steps:
Step B10: A data processing node receives a data processing command sent by a cluster client processing apparatus, where the data processing command includes one or more groups of four-tuple information, and each group of four-tuple information includes a first tree identifier, a first branch identifier, a first data block identifier, and a first node identifier.
Step B20: The data processing node performs a read or write operation according to each group of four-tuple information in the data processing command.

In the distributed data processing method provided in this embodiment, a data processing node receives a data processing command sent by a cluster client processing apparatus, where the data processing command includes one or more groups of four-tuple information, and each group of four-tuple information includes a first tree identifier, a first branch identifier, a first data block identifier, and a first node identifier, and a read or write operation is performed according to each group of four-tuple information in the data processing command. By setting the storage information that includes the tree identifier, the branch identifier, the data block identifier, and the node identifier, the storage information can be managed and maintained in more flexible manners by using each data block on the logical volume as a unit. When the user performs a data reading or writing operation, the cluster client processing apparatus only needs to determine the storage information for the corresponding logical data block, and send a data processing command to the data processing node accordingly, and the data processing node can perform the corresponding operation on a specific physical data block according to the storage information in the data processing command, thereby avoiding occupation of memory space and a resource consumption problem brought by a need for global setting or Bitmap reading/writing in a distributed storage system, and improving data processing efficiency.

In this embodiment, the data processing command is used to indicate a data reading operation, and correspondingly, step B20-the performing, by the data processing node, a read or write operation according to each group of four-tuple information in the data processing command, may specifically include:
obtaining, by the data processing node, each group of four-tuple information in the data processing command, and determining, according to the four-tuple information, a physical data block to be processed in a data storage device, and, if the physical data block exists, directly performing a read operation on the physical data block.

In this embodiment, the distributed data processing method may further include:
if the physical data block does not exist, decreasing, by the data processing node, the first node identifier in each group of four-tuple information at a step of 1 until it is found that a physical data block corresponding to the decreased four-tuple information exists; and
if the corresponding physical data block still does not exist after the first node identifier in each group of four-tuple information is decreased to 0, decreasing, by the data processing node, the first branch identifier in each group of four-tuple information at a step of 1 to find whether the corresponding physical data block exists on a parent branch until the corresponding physical data block is found.

Specifically, if the data processing command is used to indicate a data reading operation, for example, if the four-tuple information of the data processing command is 0004, the data processing node finds whether the four-tuple information 0004 for the corresponding physical data block exists, and, if it exists, the physical data block is a physical data block to be processed, and data stored in the physical data block is read. In a case in which the four-tuple information 0004 is generated out of a snapshot operation and a clone operation on the data, and the data processing node is not notified, the four-tuple information 0004 may not exist in the data processing node. If the physical data block corresponding to the four-tuple information 0004 does not exist, and the first branch identifier is 0, the data processing node decreases the first node identifier at a step of 1, and finds whether the physical data block corresponding to 0003 exists, and, if it does not exist, finds whether the physical data block corresponding to 0002 exists, which goes on until the physical data block is found. If the first branch identifier is not 0, for example, if the four-tuple information is 0011, it indicates that an object of the data reading operation is a clone volume. If the corresponding physical data block still does not exist after the node identifier of the four-tuple information 0011 is decreased to 0, that is, 0010, it can be learnt from the clone relationship that 0010 and 0000 are in a clone relationship, and therefore, according to the clone relationship, 0000 can be determined and data stored in the physical data block corresponding to 0000 can be read.

In this embodiment, the data processing command is used to indicate a data writing operation; and correspondingly, step B20-the performing, by the data processing node, a read or write operation according to each group of four-tuple information in the data processing command, may specifically include:
obtaining, by the data processing node, each group of four-tuple information in the data processing command, and determining, according to the four-tuple information, a physical data block to be allocated in a data storage device, and performing a write operation on the physical data block to be allocated.

Specifically, the data writing processing command carries to-be-written data, and data writing processing on the physical data block to be processed is a process of writing the to-be-written data into the physical data block to be processed.

During a practical implementation process, the processing may vary with a size of the to-be-written data. For example, the four-tuple information is 0004, a physical data block is allocated to the four-tuple information 0004, the to-be-written data is AB, and the size of the to-be-written data AB is the same as a size of the physical data block to be processed. Therefore, the AB may be directly written into the physical data block to be processed. If the to-be-written data is C, and data stored in the physical data block corresponding to 0003 in the data processing node is AB, AB may be taken out and put into a buffer first, AB is changed toAC, and then AC is written into the physical data block to be processed that corresponds to 0004.

FIG. 8 is a schematic structural diagram of a cluster client processing apparatus according to an embodiment of the present invention. As shown in FIG. 8, the cluster client processing apparatus provided in this embodiment can specifically implement all steps of the distributed data processing method that is provided in any embodiment of the present invention and applicable to the cluster client processing apparatus, and details are not described herein again.

The cluster client processing apparatus provided in this embodiment specifically includes a synchronizing unit 21, a first read/write processing unit 22, a second read/write processing unit 23, and a sending unit 24. The synchronizing unit 21 is configured to receive storage information of a logical volume sent by a management apparatus and currently used by a user, where the storage information of the logical volume is four-tuple information that describes each logical data block on the logical volume, where the four-tuple information includes a tree identifier, a data block identifier, a branch identifier, and a node identifier. The first read/write processing unit 22 is connected to the synchronizing unit 21, and is configured to receive a data reading or writing command sent by the user, and determine a first storage information according to the data reading or writing command and the storage information of the logical volume, where the first storage information includes one or more groups of four-tuple information, and each group of four-tuple information includes a first tree identifier, a first branch identifier, a first data block identifier, and a first node identifier. The second read/write processing unit 23 is connected to the first read/write processing unit 22, and is configured to determine a data processing node corresponding to each group of four-tuple storage information according to the tree identifier and the data block identifier in each group of four-tuple information. The sending unit 24 is connected to the second read/write processing unit 23, and is configured to send a data processing command to the data processing node corresponding to each group of four-tuple information, where the data processing command includes each group of four-tuple information corresponding to the data processing node so that the data processing node corresponding to each group of four-tuple information performs a read or write operation according to each group of four-tuple information.

In the cluster client processing apparatus provided in this embodiment, a synchronizing unit 21 receives storage information of a logical volume sent by a management apparatus and currently used by a user, where the storage information of the logical volume is four-tuple information that describes a logical data block, where the four-tuple information includes a tree identifier, a data block identifier, a branch identifier, and a node identifier; equally divides the logical volume to obtain logical data blocks of a same size; a first read/write processing unit 22 receives a data reading or writing command sent by the user, and determines a first storage information according to the data reading or writing command and the storage information of the logical volume; a second read/write processing unit 23 determines a data processing node corresponding to each group of four-tuple storage information according to the tree identifier and the data block identifier in each group of four-tuple information; and the sending unit 24 sends a data processing command to the data processing node corresponding to each group of four-tuple information, so that the data processing node corresponding to each group of four-tuple information performs a read or write operation according to each group of four-tuple information. By setting the storage information that includes the tree identifier, the branch identifier, the data block identifier, and the node identifier, the storage information can be managed and maintained in more flexible manners by using each data block on the logical volume as a unit. When the user performs a data reading or writing operation, the cluster client processing apparatus only needs to determine the storage information for the corresponding logical data block and perform a corresponding operation accordingly, thereby avoiding occupation of memory space and a resource consumption problem brought by a need for global setting or Bitmap reading/writing in a distributed storage system, and improving data processing efficiency.

FIG. 9 is a schematic structural diagram of another cluster client processing apparatus according to an embodiment of the present invention. As shown in FIG. 9, in this embodiment, the first read/write processing unit 22 is further configured to obtain the first tree identifier and the first branch identifier of the logical volume corresponding to the data reading or writing command according to the storage information of the logical volume and operation object information in the data reading or writing command, determine one or more groups of first data block identifiers according to the storage information of the logical volume and offset information in the data reading or writing command, obtain a maximum node identifier corresponding to the one or more groups of first data block identifiers, the first tree identifier, and the first branch identifier, and add 1 to the maximum node identifier to generate the first node identifier.

Further, in this embodiment, the cluster client processing apparatus may further include a first snapshot processing unit 25 and a second snapshot processing unit 26. The first snapshot processing unit 25 is connected to the synchronizing unit 21, and is configured to receive a snapshot command sent by the management apparatus, and determine a second storage information according to the snapshot command and the storage information of the logical volume, where the second storage information includes one or more groups of four-tuple information, and each group of four-tuple information includes a second tree identifier, a second branch identifier, a second data block identifier, and a second node identifier; and the second snapshot processing unit 26 is connected to the first snapshot processing unit 25, and is configured to obtain a second maximum node identifier corresponding to the second tree identifier, the second branch identifier, and the second data block identifier, and add 1 to the second maximum node identifier.

During a process in which the user performs processing of a snapshot operation on data, the data processing node may not be notified. That is, the data processing node performs no processing on the snapshot operation, and the snapshot operation on the data is only recorded in the cluster client processing apparatus, which reduces workload of the data processing node and avoids resource waste.

Further, in this embodiment, the cluster client processing apparatus may further include a first clone processing unit 27 and a second clone processing unit 28. The first clone processing unit 27 is connected to the synchronizing unit 21, and is configured to receive a clone command sent by the management apparatus, and determine a third storage information according to the clone command and the storage information of the logical volume, where the third storage information includes a third tree identifier, a third branch identifier, a third data block identifier, and a third node identifier. The second clone processing unit 28 is connected to the first clone processing unit 27, and is configured to obtain a maximum branch identifier corresponding to the third tree identifier and the third data block identifier, add 1 to the maximum branch identifier to generate a clone branch identifier, generate a fourth storage information out of the third tree identifier, the third data block identifier, the clone branch identifier, and a clone node identifier, establish a clone relationship between the fourth storage information and the third storage information, and broadcast the clone relationship, where the clone node identifier is 0.

During a process in which the user performs processing of a clone operation on the data, it is possible that only the clone relationship needs to be notified to the corresponding data processing node by means of broadcast, and therefore, when the user performs a read or write operation on the data, the data processing node performs corresponding processing according to the clone relationship, and when needing to learn the clone relationship, the data processing node requests the clone relationship from the cluster client processing apparatus, which reduces processing pressure of the cluster client processing apparatus.

In this embodiment, the cluster client processing apparatus further includes a deleting unit 29. The deleting unit 29 is connected to the synchronizing unit 21, and is configured to receive a file closing command sent by the management apparatus, and delete the storage information of the logical volume. By setting the deleting unit, the storage information of the logical volume corresponding to a file closed by the user may be deleted, so as to release storage space and avoid waste of the storage space.

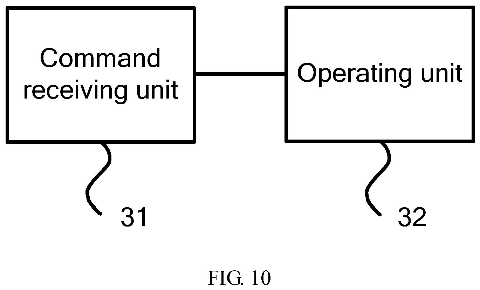

FIG. 10 is a schematic structural diagram of a data processing node according to an embodiment of the present invention. As shown in FIG. 10, the data processing node provided in this embodiment can specifically implement all steps of the distributed data processing method that is provided in any embodiment of the present invention and applicable to the data processing node, and details are not described herein again.

The data processing node provided in this embodiment specifically includes a command receiving unit 31 and an operating unit 32. The command receiving unit 31 is configured to receive a data processing command sent by a cluster client processing apparatus, where the data processing command includes one or more groups of four-tuple information, and each group of four-tuple information includes a first tree identifier, a first branch identifier, a first data block identifier, and a first node identifier. The operating unit 32 is connected to the command receiving unit 31, and is configured to perform a read or write operation according to each group of four-tuple information in the data processing command.

In the data processing node provided in this embodiment, a command receiving unit 31 receives a data processing command sent by a cluster client processing apparatus, where the data processing command includes one or more groups of four-tuple information, and each group of four-tuple information includes a first tree identifier, a first branch identifier, a first data block identifier, and a first node identifier, and an operating unit 32 performs a read or write operation according to each group of four-tuple information in the data processing command. By setting the storage information that includes the tree identifier, the branch identifier, the data block identifier, and the node identifier, the storage information can be managed and maintained in more flexible manners by using each data block on the logical volume as a unit. When a user performs a data reading or writing operation, the cluster client processing apparatus only needs to determine the storage information for a corresponding logical data block, and send a data processing command to the data processing node accordingly, and the data processing node can perform the corresponding operation on a specific physical data block according to the storage information in the data processing command, thereby avoiding occupation of memory space and a resource consumption problem brought by a need for global setting or Bitmap reading/writing in a distributed storage system, and improving data processing efficiency.

In this embodiment, the data processing command is used to indicate a data reading operation, and correspondingly, the operating unit 32 is further configured to obtain each group of four-tuple information in the data processing command, and determine, according to the four-tuple information, a physical data block to be processed in a data storage device, and, if the physical data block exists, directly perform a read operation on the physical data block.

In this embodiment, the operating unit 32 is further configured to: if the physical data block does not exist, decrease the first node identifier in each group of four-tuple information at a step of 1 until it is found that a physical data block corresponding to a decreased four-tuple information exists; and if the corresponding physical data block still does not exist after the first node identifier in each group of four-tuple information is decreased to 0, decrease the first branch identifier in each group of four-tuple information at a step of 1 to find whether the corresponding physical data block exists on a parent branch until the corresponding physical data block is found.

In this embodiment, the data processing command is used to indicate a data writing operation, and correspondingly, the operating unit 32 is further configured to obtain each group of four-tuple information in the data processing command, and determine, according to the four-tuple information, a physical data block to be allocated in a data storage device, and perform a write operation on the physical data block to be allocated.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A distributed data processing method, comprising:
receiving (A10), by a cluster client processing apparatus, storage information of a logical volume that is currently used by a user, wherein the storage information is sent by a management apparatus, wherein the storage information of the logical volume comprises four-tuple information that describes each logical data block on the logical volume, wherein the four-tuple information comprises a tree identifier, a data block identifier, a branch identifier, and a node identifier, wherein the tree identifier is used to indicate a logical volume on which the logical data block is located, and all logical data blocks located on a same logical volume have a same tree identifier, wherein the data block identifier is used to indicate a location of the logical data block in the logical volume, wherein when a new logical volume is created, a branch identifier of the new logical volume is set to 0, whenever a clone volume is created onto the logical volume, a new branch identifier is allocated to the clone volume, and a clone relationship between the clone volume and the logical volume is recorded, wherein the node identifier is used to indicate a snapshot operation for the logical volume or the clone volume, a node identifier of the logical volume is set to 0, whenever a snapshot volume is created onto the logical volume or the clone volume, a new node identifier is allocated to the snapshot volume;
receiving (A20), by the cluster client processing apparatus, a data reading or writing command sent by a terminal of the user, and determining a first storage information according to the data reading or writing command and the storage information of the logical volume, wherein the first storage information comprises one or more groups of first four-tuple information, and each group of first four-tuple information comprises a first tree identifier, a first branch identifier, a first data block identifier, and a first node identifier;
determining (A30), by the cluster client processing apparatus, a data processing node corresponding to each group of first four-tuple storage information according to the tree identifier and the data block identifier in each group of first four-tuple information; and
sending (A40), by the cluster client processing apparatus, a data processing command to the data processing node corresponding to each group of four-tuple information, wherein the data processing command comprises each group of first four-tuple information corresponding to the data processing node so that the data processing node corresponding to each group of first four-tuple information performs a read or write operation according to each group of first four-tuple information;
wherein when the data processing command is used to indicate a data reading operation, the performing, by the data processing node corresponding to each group of first four-tuple information, a read operation according to each group of four-tuple information, comprises:
obtaining, by the data processing node, each group of first four-tuple information in the data processing command, and determining, according to the first four-tuple information, a physical data block to be processed in a data storage device, and, if the physical data block exists, performing a read operation on the physical data block;
if the physical data block does not exist, decreasing, by the data processing node, the first node identifier in each group of first four-tuple information at a step of 1 until it is found that a physical data block corresponding to a decreased first four-tuple information exists; and
if the corresponding physical data block still does not exist after the first node identifier in each group of four-tuple information is decreased to 0, decreasing, by the data processing node, the first branch identifier in each group of first four-tuple information at a step of 1 to find whether the corresponding physical data block exists on a parent branch until the corresponding physical data block is found.

2. The distributed data processing method according to claim 1, wherein the determining, by the cluster client processing apparatus, a first storage information according to the data reading or writing command and the storage information of the logical volume, comprises:
obtaining, by the cluster client processing apparatus, the first tree identifier and the first branch identifier of the logical volume corresponding to the data reading or writing command according to the storage information of the logical volume and operation object information in the data reading or writing command, determining one or more groups of first data block identifiers according to the storage information of the logical volume and offset information in the data reading or writing command, obtaining each maximum node identifier corresponding to the one or more groups of first data block identifiers, the first tree identifier, and the first branch identifier, and adding 1 to each maximum node identifier to generate each first node identifier.

3. The distributed data processing method according to claim 1, wherein, after the receiving, by a cluster client processing apparatus, storage information of a logical volume sent by a management apparatus and currently used by a user, the method further comprises:
receiving (A50), by the cluster client processing apparatus, a snapshot command sent by the management apparatus, and determining a second storage information according to the snapshot command and the storage information of the logical volume, wherein the second storage information comprises one or more groups of second four-tuple information, and each group of four-tuple information comprises a second tree identifier, a second branch identifier, a second data block identifier, and a second node identifier; and
obtaining (A60), by the cluster client processing apparatus, a second maximum node identifier corresponding to the second tree identifier, the second branch identifier, and the second data block identifier, and adding 1 to each second maximum node identifier.

4. The distributed data processing method according to claim 1, wherein, after the receiving, by a cluster client processing apparatus, storage information of a logical volume sent by a management apparatus and currently used by a user, the method further comprises:
receiving (A70), by the cluster client processing apparatus, a clone command sent by the management apparatus, and determining a third storage information according to the clone command and the storage information of the logical volume, wherein the third storage information comprises a third tree identifier, a third branch identifier, a third data block identifier, and a third node identifier; and
obtaining (A80), by the cluster client processing apparatus, a maximum branch identifier corresponding to the third tree identifier and the third data block identifier, adding 1 to the maximum branch identifier to generate a clone branch identifier, generating a fourth storage information out of the third tree identifier, the third data block identifier, the clone branch identifier, and a clone node identifier, establishing a clone relationship between the fourth storage information and the third storage information, and broadcasting the clone relationship, wherein the clone node identifier is 0.

5. A distributed data processing system, comprising
a cluster client processing apparatus and a data processing node, wherein
the cluster client processing apparatus is configured to receive storage information of a logical volume that is currently used by a user, wherein the storage information is sent by a management apparatus, wherein the storage information of the logical volume comprises four-tuple information that describes each logical data block on the logical volume, wherein the four-tuple information comprises a tree identifier, a data block identifier, a branch identifier, and a node identifier, wherein the tree identifier is used to indicate a logical volume on which the logical data block is located, and all logical data blocks located on a same logical volume have a same tree identifier, wherein the data block identifier is used to indicate a location of the logical data block in the logical volume, wherein when a new logical volume is created, a branch identifier of the new logical volume is set to 0, whenever a clone volume is created onto the logical volume, a new branch identifier is allocated to the clone volume, and a clone relationship between the clone volume and the logical volume is recorded, wherein the node identifier is used to indicate a snapshot operation for the logical volume or the clone volume, a node identifier of the logical volume is set to 0, whenever a snapshot volume is created onto the logical volume or the clone volume, a new node identifier is allocated to the snapshot volume;
the cluster client processing apparatus is further configured to receive a data reading or writing command sent by a terminal of the user, and determine a first storage information according to the data reading or writing command and the storage information of the logical volume, wherein the first storage information comprises one or more groups of first four-tuple information, and each group of first four-tuple information comprises a first tree identifier, a first branch identifier, a first data block identifier, and a first node identifier;
the cluster client processing apparatus is further configured to determine a data processing node corresponding to each group of first four-tuple storage information according to the tree identifier and the data block identifier in each group of first four-tuple information; and
the cluster client processing apparatus is further configured to send a data processing command to the data processing node corresponding to each group of four-tuple information, wherein the data processing command comprises each group of first four-tuple information corresponding to the data processing node so that the data processing node corresponding to each group of first four-tuple information performs a read or write operation according to each group of first four-tuple information; and wherein
the data processing node is configured, when the data processing command is used to indicate a data reading operation, to obtain each group of first four-tuple information in the data processing command, and to determine, according to the first four-tuple information, a physical data block to be processed in a data storage device, and, if the physical data block exists, to perform a read operation on the physical data block;
the data processing node is further configured, if the physical data block does not exist, to decrease the first node identifier in each group of first four-tuple information at a step of 1 until it is found that a physical data block corresponding to a decreased first four-tuple information exists; and
the data processing node is further configured, if the corresponding physical data block still does not exist after the first node identifier in each group of four-tuple information is decreased to 0, to decrease the first branch identifier in each group of first four-tuple information at a step of 1 to find whether the corresponding physical data block exists on a parent branch until the corresponding physical data block is found.

## Patentansprüche

1. Verteiltes Datenverarbeitungsverfahren, das Folgendes umfasst:
Empfangen (A10) durch eine Cluster-Client-Verarbeitungsvorrichtung von Speicherinformationen eines logischen Datenträgers, der aktuell durch einen Anwender verwendet wird, wobei die Speicherinformationen durch eine Managementvorrichtung gesendet werden, wobei die Speicherinformationen des logischen Datenträgers Vierertupelinformationen umfassen, die jeden logischen Datenblock auf dem logischen Datenträger beschreiben, wobei die Vierertupelinformationen einen Baumbezeichner, einen Datenblockbezeichner, einen Zweigbezeichner und einen Knotenbezeichner umfassen, wobei der Baumbezeichner verwendet wird, um einen logischen Datenträger anzugeben, auf dem sich der logische Datenblock befindet, und alle logischen Datenblöcke, die sich auf demselben logischen Datenträger befinden, denselben Baumbezeichner aufweisen, wobei der Datenblockbezeichner verwendet wird, um einen Ort des logischen Datenblocks in dem logischen Datenträger anzugeben, wobei dann, wenn ein neuer logischer Datenträger erzeugt wird, ein Zweigbezeichner des neuen logischen Datenträgers auf 0 eingestellt wird, immer, wenn ein Klondatenträger auf den logischen Datenträger erzeugt wird, dem Klondatenträger ein neuer Zweigbezeichner zugewiesen wird und eine Klonbeziehung zwischen dem Klondatenträger und dem logischen Datenträger aufgezeichnet wird, wobei der Knotenbezeichner verwendet wird, um eine Speicherauszugoperation für den logischen Datenträger oder den Klondatenträger anzugeben, ein Knotenbezeichner des logischen Datenträgers auf 0 eingestellt wird, immer, wenn ein Speicherauszugdatenträger auf den logischen Datenträger oder den Klondatenträger erzeugt wird, dem Speicherauszugdatenträger ein neuer Knotenbezeichner zugewiesen wird;
Empfangen (A20) durch die Cluster-Client-Verarbeitungsvorrichtung eines Datenlese- oder -schreibbefehls, der durch ein Endgerät des Anwenders gesendet wird, und Bestimmen einer ersten Speicherinformation gemäß dem Datenlese-oder -schreibbefehl und den Speicherinformationen des logischen Datenträgers, wobei die erste Speicherinformation eine oder mehrere Gruppen erster Vierertupelinformationen umfasst und jede Gruppe erster Vierertupelinformationen einen ersten Baumbezeichner, einen ersten Zweigbezeichner, einen ersten Datenblockbezeichner und einen ersten Knotenbezeichner umfasst;
Bestimmen (A30) durch die Cluster-Client-Verarbeitungsvorrichtung eines Datenverarbeitungsknotens, der jeder Gruppe erster Vierertupelspeicherinformationen entspricht, gemäß dem Baumbezeichner und dem Datenblockbezeichner in jeder Gruppe erster Vierertupelinformationen; und
Senden (A40) durch die Cluster-Client-Verarbeitungsvorrichtung eines Datenverarbeitungsbefehls zu dem Datenverarbeitungsknoten, der jeder Gruppe von Vierertupelinformationen entspricht, wobei der Datenverarbeitungsbefehl jede Gruppe erster Vierertupelinformationen umfasst, die dem Datenverarbeitungsknoten entsprechen, so dass der Datenverarbeitungsknoten, der jeder Gruppe erster Vierertupelinformationen entspricht, eine Lese- oder Schreiboperation gemäß jeder Gruppe erster Vierertupelinformationen ausführt;
wobei dann, wenn der Datenverarbeitungsbefehl verwendet wird, um eine Datenleseoperation anzugeben, das Ausführen durch den Datenverarbeitungsknoten, der jeder Gruppe erster Vierertupelinformationen entspricht, einer Leseoperation gemäß jeder Gruppe von Vierertupelinformationen Folgendes umfasst:
Erhalten durch den Datenverarbeitungsknoten jeder Gruppe erster Vierertupelinformationen in dem Datenverarbeitungsbefehl und Bestimmen gemäß den ersten Vierertupelinformationen eines physikalischen Datenblocks, der verarbeitet werden soll, in einer Datenspeichervorrichtung, und, falls der physikalische Datenblock existiert, Ausführen einer Leseoperation auf dem physikalischen Datenblock;
falls der physikalische Datenblock nicht existiert, Verringern durch den Datenverarbeitungsknoten des ersten Knotenbezeichners in jeder Gruppe erster Vierertupelinformationen um einen Schritt von 1, bis gefunden wird, dass ein physikalischer Datenblock, der einer verringerten ersten Vierertupelinformation entspricht, existiert; und
falls der entsprechende physikalische Datenblock immer noch nicht existiert, nachdem der erste Knotenbezeichner in jeder Gruppe von Vierertupelinformationen auf 0 verringert worden ist, Verringern durch den Datenverarbeitungsknoten des ersten Zweigbezeichners in jeder Gruppe erster Vierertupelinformationen um einen Schritt von 1, um zu erkennen, ob der entsprechende physikalische Datenblock auf einem Elternzweig existiert, bis der entsprechende physikalische Datenblock gefunden wird.

2. Verteiltes Datenverarbeitungsverfahren nach Anspruch 1, wobei das Bestimmen durch die Cluster-Client-Verarbeitungsvorrichtung einer ersten Speicherinformation gemäß dem Datenlese- oder -schreibbefehl und den Speicherinformationen des logischen Datenträgers Folgendes umfasst:
Erhalten durch die Cluster-Client-Verarbeitungsvorrichtung des ersten Baumbezeichners und des ersten Zweigbezeichners des logischen Datenträgers, der dem Datenlese- oder -schreibbefehl entspricht, gemäß den Speicherinformationen des logischen Datenträgers und Operationsobjektinformationen in dem Datenlese-oder -schreibbefehl, Bestimmen einer oder mehrerer Gruppen erster Datenblockbezeichner gemäß den Speicherinformationen des logischen Datenträgers und Versatzinformationen in dem Datenlese- oder -schreibbefehl, Erhalten jedes maximalen Knotenbezeichners, der der einen oder den mehreren Gruppen erster Datenblockbezeichner, dem ersten Baumbezeichner und dem ersten Zweigbezeichner entspricht, und Addieren von 1 zu jedem maximalen Knotenbezeichner, um jeden ersten Knotenbezeichner zu erzeugen.

3. Verteiltes Datenverarbeitungsverfahren nach Anspruch 1, wobei das Verfahren nach dem Empfangen durch eine Cluster-Client-Verarbeitungsvorrichtung von Speicherinformationen eines logischen Datenträgers, die durch eine Managementvorrichtung gesendet werden und aktuell durch einen Anwender verwendet werden, ferner Folgendes umfasst:
Empfangen (A50) durch die Cluster-Client-Verarbeitungsvorrichtung eines Speicherauszugbefehls, der durch die Managementvorrichtung gesendet wird, und Bestimmen einer zweiten Speicherinformation gemäß dem Speicherauszugbefehl und den Speicherinformationen des logischen Datenträgers, wobei die zweite Speicherinformation eine oder mehrere Gruppen zweiter Vierertupelinformationen umfasst und jede Gruppe von Vierertupelinformationen einen zweiten Baumbezeichner, einen zweiten Zweigbezeichner, einen zweiten Datenblockbezeichner und einen zweiten Knotenbezeichner umfasst; und
Erhalten (A60) durch die Cluster-Client-Verarbeitungsvorrichtung eines zweiten maximalen Knotenbezeichners, der dem zweiten Baumbezeichner, dem zweiten Zweigbezeichner und dem zweiten Datenblockbezeichner entspricht, und Addieren von 1 zu jedem zweiten maximalen Knotenbezeichner.

4. Verteiltes Datenverarbeitungsverfahren nach Anspruch 1, wobei das Verfahren nach dem Empfangen durch eine Cluster-Client-Verarbeitungsvorrichtung von Speicherinformationen eines logischen Datenträgers, die durch eine Managementvorrichtung gesendet werden und aktuell durch einen Anwender verwendet werden, ferner Folgendes umfasst:
Empfangen (A70) durch die Cluster-Client-Verarbeitungsvorrichtung eines Klonbefehls, der durch die Managementvorrichtung gesendet wird, und Bestimmen einer dritten Speicherinformation gemäß dem Klonbefehl und den Speicherinformationen des logischen Datenträgers, wobei die dritte Speicherinformation einen dritten Baumbezeichner, einen dritten Zweigbezeichner, einen dritten Datenblockbezeichner und einen dritten Knotenbezeichner umfasst; und Erhalten (A80) durch die Cluster-Client-Verarbeitungsvorrichtung eines maximalen Zweigbezeichners, der dem dritten Baumbezeichner und dem dritten Datenblockbezeichner entspricht, Addieren von 1 zu dem maximalen Zweigbezeichner, um einen Klonzweigbezeichner zu erzeugen, Erzeugen einer vierten Speicherinformation aus dem dritten Baumbezeichner, dem dritten Datenblockbezeichner, dem Klonzweigbezeichner und einem Klonknotenbezeichner, Aufbauen einer Klonbeziehung zwischen der vierten Speicherinformation und der dritten Speicherinformation und Rundsenden der Klonbeziehung, wobei der Klonknotenbezeichner 0 ist.

5. Verteiltes Datenverarbeitungssystem, das Folgendes umfasst:
eine Cluster-Client-Verarbeitungsvorrichtung und einen Datenverarbeitungsknoten, wobei
die Cluster-Client-Verarbeitungsvorrichtung konfiguriert ist, Speicherinformationen eines logischen Datenträgers, der aktuell durch einen Anwender verwendet wird, zu empfangen, wobei die Speicherinformationen durch eine Managementvorrichtung gesendet werden, wobei die Speicherinformationen des logischen Datenträgers Vierertupelinformationen umfassen, die jeden logischen Datenblock auf dem logischen Datenträger beschreiben, wobei die Vierertupelinformationen einen Baumbezeichner, einen Datenblockbezeichner, einen Zweigbezeichner und einen Knotenbezeichner umfassen, wobei der Baumbezeichner verwendet wird, um einen logischen Datenträger anzugeben, auf dem sich der logische Datenblock befindet, und alle logischen Datenblöcke, die sich auf demselben logischen Datenträger befinden, denselben Baumbezeichner aufweisen, wobei der Datenblockbezeichner verwendet wird, um einen Ort des logischen Datenblocks in dem logischen Datenträger anzugeben, wobei dann, wenn ein neuer logischer Datenträger erzeugt wird, ein Zweigbezeichner des neuen logischen Datenträgers auf 0 eingestellt wird, immer, wenn ein Klondatenträger auf den logischen Datenträger erzeugt wird, dem Klondatenträger ein neuer Zweigbezeichner zugewiesen wird, und eine Klonbeziehung zwischen dem Klondatenträger und dem logischen Datenträger aufgezeichnet wird, wobei der Knotenbezeichner verwendet wird, um eine Speicherauszugoperation für den logischen Datenträger oder den Klondatenträger anzugeben, ein Knotenbezeichner des logischen Datenträgers auf 0 eingestellt wird, immer, wenn ein Speicherauszugdatenträger auf den logischen Datenträger oder den Klon-Datenträger erzeugt wird, dem Speicherauszugdatenträger ein neuer Knotenbezeichner zugewiesen wird;
die Cluster-Client-Verarbeitungsvorrichtung ferner konfiguriert ist, einen Datenlese-oder -schreibbefehl, der durch ein Endgerät des Anwenders gesendet wird, zu empfangen und eine erste Speicherinformation gemäß dem Datenlese-oder -schreibbefehl und den Speicherinformationen, des logischen Datenträgers zu bestimmen, wobei die erste Speicherinformation eine oder mehrere Gruppen erster Vierertupelinformationen umfasst und jede Gruppe erster Vierertupelinformationen einen ersten Baumbezeichner, einen ersten Zweigbezeichner, einen ersten Datenblockbezeichner und einen ersten Knotenbezeichner umfasst;
die Cluster-Client-Verarbeitungsvorrichtung ferner konfiguriert ist, einen Datenverarbeitungsknoten, der jeder Gruppe erster Vierertupelinformationen entspricht, gemäß dem Baumbezeichner und dem Datenblockbezeichner in jeder Gruppe erster Vierertupelinformationen zu bestimmen; und
die Cluster-Client-Verarbeitungsvorrichtung ferner konfiguriert ist, einen Datenverarbeitungsbefehl zu dem Datenverarbeitungsknoten, der jeder Gruppe von Vierertupelinformationen entspricht, zu senden, wobei der Datenverarbeitungsbefehl jede Gruppe erster Vierertupelinformationen umfasst, die dem Datenverarbeitungsknoten entsprechen, so dass der Datenverarbeitungsknoten, der jeder Gruppe erster Vierertupelinformationen entspricht, eine Lese- oder Schreiboperation gemäß jeder Gruppe erster Vierertupelinformationen ausführt; und wobei
der Datenverarbeitungsknoten konfiguriert ist, wenn der Datenverarbeitungsbefehl verwendet wird, um eine Datenleseoperation anzugeben, jede Gruppe erster Vierertupelinformationen in dem Datenverarbeitungsbefehl zu erhalten und gemäß den ersten Vierertupelinformationen einen physikalischen Datenblock, der verarbeitet werden soll, in einer Datenspeichervorrichtung zu bestimmen, und falls der physikalische Datenblock existiert, eine Leseoperation auf dem physikalischen Datenblock auszuführen;
der Datenverarbeitungsknoten ferner konfiguriert ist, falls der physikalische Datenblock nicht existiert, den ersten Knotenbezeichner in jeder Gruppe erster Vierertupelinformationen um einen Schritt von 1 zu verringern, bis gefunden wird, dass ein physikalischer Datenblock, der einer verringerten ersten Vierertupelinformation entspricht, existiert; und
der Datenverarbeitungsknoten ferner konfiguriert ist, falls der entsprechende physikalische Datenblock immer noch nicht existiert, nachdem der erste Knotenbezeichner in jeder Gruppe von Vierertupelinformationen auf 0 verringert ist, den ersten Zweigbezeichner in jeder Gruppe erster Vierertupelinformationen um einen Schritt von 1 zu verringern, um zu erkennen, ob der entsprechende physikalische Datenblock auf einem Elternzweig existiert, bis der entsprechende physikalische Datenblock gefunden wird.

## Revendications

1. Procédé de traitement de données distribuées consistant à :
recevoir (A10), au moyen d'un appareil de traitement de client de grappe, des informations de stockage d'un volume logique qui sont couramment utilisées par un utilisateur, dans lequel les informations de stockage sont envoyées par un appareil de gestion, dans lequel les informations de stockage du volume logique comprennent des informations de quatre tuples qui décrivent chaque bloc de données logiques sur le volume logique, dans lequel les informations de quatre tuples comprennent un identifiant d'arbre, un identifiant de bloc de données, un identifiant de branche et un identifiant de noeud, dans lequel l'identifiant d'arbre est utilisé pour indiquer un volume logique sur lequel le bloc de données logiques est situé, et tous les blocs de données logiques situés sur un même volume logique ont un même identifiant d'arbre, dans lequel l'identifiant de bloc de données est utilisé pour indiquer un emplacement du bloc de données logiques dans le volume logique, dans lequel, lorsqu'un nouveau volume logique est créé, un identifiant de branche du nouveau volume logique est fixé à 0 chaque fois qu'un volume clone est créé sur le volume logique, un nouvel identifiant de branche est attribué au volume clone, et une relation de clonage entre le volume clone et le volume logique est enregistrée, dans lequel l'identifiant de noeud est utilisé pour indiquer une opération d'instantané pour le volume logique ou le volume clone, un identifiant de noeud du volume logique est fixé à 0 chaque fois qu'un volume d'instantané est créé sur le volume logique ou le volume clone, un nouvel identifiant de noeud est attribué au volume d'instantané ;
recevoir (A20), au moyen de l'appareil de traitement de client de grappe, une commande de lecture ou d'écriture de données envoyée par un terminal de l'utilisateur et déterminer des premières informations de stockage en fonction de la commande de lecture ou d'écriture de données et des informations de stockage du volume logique, dans lequel les premières informations de stockage comprennent un ou plusieurs groupes de premières informations de quatre tuples et chaque groupe de premières informations de quatre tuples comprend un premier identifiant d'arbre, un premier identifiant de branche, un premier identifiant de bloc de données et un premier identifiant de noeud ;
déterminer (A30), au moyen de l'appareil de traitement de client de grappe, un noeud de traitement de données correspondant à chaque groupe de premières informations de stockage de quatre tuples en fonction de l'identifiant d'arbre et de l'identifiant de bloc de données dans chaque groupe de premières informations de quatre tuples ; et
envoyer (A40), au moyen de l'appareil de traitement de client de grappe, une commande de traitement de données au noeud de traitement de données correspondant à chaque groupe d'informations de quatre tuples, dans lequel la commande de traitement de données comprend chaque groupe de premières informations de quatre tuples correspondant au noeud de traitement de données de telle sorte que le noeud de traitement de données correspondant à chaque groupe de premières informations de quatre tuples effectue une opération de lecture ou d'écriture en fonction de chaque groupe de premières informations de quatre tuples ;
dans lequel, lorsque la commande de traitement de données est utilisée pour indiquer une opération de lecture de données, la réalisation, au moyen du noeud de traitement de données correspondant à chaque groupe de premières informations de quatre tuples, d'une opération de lecture en fonction de chaque groupe d'informations de quatre tuples consiste à :
obtenir, au moyen du noeud de traitement de données, chaque groupe de premières informations de quatre tuples dans la commande de traitement de données et déterminer, en fonction des premières informations de quatre tuples, un bloc de données physique qui doit être traité dans un dispositif de stockage de données et, si le bloc de données physique existe, effectuer une opération de lecture sur le bloc de données physique ;
si le bloc de données physique n'existe pas, réduire, au moyen du noeud de traitement de données, le premier identifiant de noeud dans chaque groupe de premières informations de quatre tuples à un pas de 1 jusqu'à ce qu'on trouve qu'un bloc de données physique correspondant à des premières informations de quatre tuples réduites existe ; et
si le bloc de données physique correspondant n'existe toujours pas après que le premier identifiant de noeud dans chaque groupe d'informations de quatre tuples est réduit à 0, réduire, au moyen du noeud de traitement de données, le premier identifiant de branche dans chaque groupe de premières informations de quatre tuples à un pas de 1 pour trouver si le bloc de données physique correspondant existe sur une branche parente jusqu'à ce que le bloc de données physique correspondant soit trouvé.

2. Procédé de traitement de données distribuées selon la revendication 1, dans lequel la détermination, au moyen de l'appareil de traitement de client de grappe, de premières informations de stockage en fonction de la commande de lecture ou d'écriture de données et des informations de stockage du volume logique consiste à :
obtenir, au moyen de l'appareil de traitement de client de grappe, le premier identifiant d'arbre et le premier identifiant de branche du volume logique correspondant à la commande de lecture ou d'écriture de données en fonction des informations de stockage du volume logique et des informations d'objet d'opération dans la commande de lecture ou d'écriture de données, déterminer un ou plusieurs groupes de premiers identifiants de bloc de données en fonction des informations de stockage du volume logique et des informations de décalage dans la commande de lecture ou d'écriture de données, obtenir chaque identifiant de noeud maximal correspondant à l'un ou aux plusieurs groupes de premiers identifiants de bloc de données, au premier identifiant d'arbre et au premier identifiant de branche et ajouter 1 à chaque identifiant de noeud maximal pour générer chaque premier identifiant de noeud.

3. Procédé de traitement de données distribuées selon la revendication 1, dans lequel, après la réception, au moyen d'un appareil de traitement de client de grappe, d'informations de stockage d'un volume logique envoyées par un appareil de gestion et couramment utilisées par un utilisateur, le procédé consiste en outre à :
recevoir (A50), au moyen de l'appareil de traitement de client de grappe, une commande d'instantané envoyée par l'appareil de gestion et déterminer des deuxièmes informations de stockage en fonction de la commande d'instantané et des informations de stockage du volume logique, dans lequel les deuxièmes informations de stockage comprennent un ou plusieurs groupes de deuxièmes informations de quatre tuples et chaque groupe d'informations de quatre tuples comprend un deuxième identifiant d'arbre, un deuxième identifiant de branche, un deuxième identifiant de bloc de données et un deuxième identifiant de noeud ; et
obtenir (A60), au moyen de l'appareil de traitement de client de grappe, un second identifiant de noeud maximal correspondant au deuxième identifiant d'arbre, au deuxième identifiant de branche et au deuxième identifiant de bloc de données et ajouter 1 à chaque second identifiant de noeud maximal.

4. Procédé de traitement de données distribuées selon la revendication 1, dans lequel, après la réception, au moyen d'un appareil de traitement de client de grappe, d'informations de stockage d'un volume logique envoyées par un appareil de gestion et couramment utilisées par un utilisateur, le procédé consiste en outre à :
recevoir (A70), au moyen de l'appareil de traitement de client de grappe, une commande de clonage envoyée par l'appareil de gestion et déterminer des troisièmes informations de stockage en fonction de la commande de clonage et des informations de stockage du volume logique, dans lequel les troisièmes informations de stockage comprennent un troisième identifiant d'arbre, un troisième identifiant de branche, un troisième identifiant de bloc de données et un troisième identifiant de noeud ; et
obtenir (A80), au moyen de l'appareil de traitement de client de grappe, un identifiant de branche maximal correspondant au troisième identifiant d'arbre et au troisième identifiant de bloc de données, ajouter 1 à l'identifiant de branche maximal pour générer un identifiant de branche de clonage, générer des quatrièmes informations de stockage par le troisième identifiant d'arbre, le troisième identifiant de bloc de données, l'identifiant de branche de clonage et un identifiant de noeud de clonage, établir une relation de clonage entre les quatrièmes informations de stockage et les troisièmes informations de stockage, et diffuser la relation de clonage, dans lequel l'identifiant de noeud de clonage est 0.

5. Système de traitement de données distribuées, comprenant
un appareil de traitement de client de grappe et un noeud de traitement de données, dans lequel
l'appareil de traitement de client de grappe est configuré pour recevoir des informations de stockage d'un volume logique qui sont couramment utilisées par un utilisateur, dans lequel les informations de stockage sont envoyées par un appareil de gestion, dans lequel les informations de stockage du volume logique comprennent des informations de quatre tuples qui décrivent chaque bloc de données logiques concernant le volume logique, dans lequel les informations de quatre tuples comprennent un identifiant d'arbre, un identifiant de bloc de données, un identifiant de branche et un identifiant de noeud, dans lequel l'identifiant d'arbre est utilisé pour indiquer un volume logique sur lequel le bloc de données logiques est situé, et tous les blocs de données logiques situés sur un même volume logique ont un même identifiant d'arbre, dans lequel l'identifiant de bloc de données est utilisé pour indiquer un emplacement du bloc de données logiques dans le volume logique, dans lequel, lorsqu'un nouveau volume logique est créé, un identifiant de branche du nouveau volume logique est fixé à 0 chaque fois qu'un volume clone est créé sur le volume logique, un nouvel identifiant de branche est attribué au volume clone, et une relation de clonage entre le volume clone et le volume logique est enregistrée, dans lequel l'identifiant de noeud est utilisé pour indiquer une opération d'instantané pour le volume logique ou le volume clone, un identifiant de noeud du volume logique est fixé à 0 chaque fois qu'un volume d'instantané est créé sur le volume logique ou le volume clone, un nouvel identifiant de noeud est attribué au volume d'instantané ; l'appareil de traitement de client de grappe est en outre configuré pour recevoir une commande de lecture ou d'écriture de données envoyée par un terminal de l'utilisateur et déterminer des premières informations de stockage en fonction de la commande de lecture ou d'écriture de données et des informations de stockage du volume logique, dans lequel les premières informations de stockage comprennent un ou plusieurs groupes de premières informations de quatre tuples et chaque groupe de premières informations de quatre tuples comprend un premier identifiant d'arbre, un premier identifiant de branche, un premier identifiant de bloc de données et un premier identifiant de noeud ;
l'appareil de traitement de client de grappe est en outre configuré pour déterminer un noeud de traitement de données correspondant à chaque groupe de premières informations de stockage de quatre tuples en fonction de l'identifiant d'arbre et de l'identifiant de bloc de données dans chaque groupe de premières informations de quatre tuples ; et
l'appareil de traitement de client de grappe est en outre configuré pour envoyer une commande de traitement de données au noeud de traitement de données correspondant à chaque groupe d'informations de quatre tuples, dans lequel la commande de traitement de données comprend chaque groupe de premières informations de quatre tuples correspondant au noeud de traitement de données de telle sorte que le noeud de traitement de données correspondant à chaque groupe de premières informations de quatre tuples effectue une opération de lecture ou d'écriture en fonction de chaque groupe de premières informations de quatre tuples ; et dans lequel
le noeud de traitement de données est configuré, lorsque la commande de traitement de données est utilisée pour indiquer une opération de lecture de données, pour obtenir chaque groupe de premières informations de quatre tuples dans la commande de traitement de données et pour déterminer, en fonction des premières informations de quatre tuples, un bloc de données physique qui doit être traité dans un dispositif de stockage de données et, si le bloc de données physique existe, pour effectuer une opération de lecture sur le bloc de données physique ;
le noeud de traitement de données est en outre configuré, si le bloc de données physique n'existe pas, pour réduire le premier identifiant de noeud dans chaque groupe de premières informations de quatre tuples à un pas de 1 jusqu'à ce qu'on trouve qu'un bloc de données physique correspondant à des premières informations de quatre tuples réduites existe ; et
le noeud de traitement de données est en outre configuré, si le bloc de données physique correspondant n'existe toujours pas après que le premier identifiant de noeud dans chaque groupe d'informations de quatre tuples est réduit à 0, pour réduire le premier identifiant de branche dans chaque groupe de premières informations de quatre tuples à un pas de 1 pour trouver si le bloc de données physique correspondant existe sur une branche parente jusqu'à ce que le bloc de données physique correspondant soit trouvé.
